# EUROPEAN PATENT SPECIFICATION

(11) **EP 4 325 633 B1**
(45) Date of publication and mention of the grant of the patent: **20.05.2026**
(21) Application number: 22916534.5
(22) Date of filing: 09.12.2022
(51) Int. Cl.: H01M 10/613, H01M 10/6551, H01M 50/20, H01M 10/647, H01M 10/625, H01M 10/627, H01M 10/6556, H01M 10/6557

(54) **BATTERY MODULE, BATTERY PACK INCLUDING SUCH BATTERY MODULE, AND ENERGY STORAGE SYSTEM AND VEHICLE INCLUDING THE BATTERY PACK**
BATTERIEMODUL, BATTERIEPACK MIT SOLCH EINEM BATTERIEMODUL SOWIE ENERGIESPEICHERVORRICHTUNG UND FAHRZEUG MIT SOLCH EINEM BATTERIEPACK
MODULE DE BATTERIE, BLOC-BATTERIE COMPRENANT UN TEL MODULE DE BATTERIE, ET DISPOSITIF DE STOCKAGE D'ÉNERGIE ET VÉHICULE COMPRENANT UN TEL BLOC-BATTERIE

(30) Priority: 27.12.2021 KR 20210189011
(43) Date of publication of application: 21.02.2024
(73) Proprietor: LG Energy Solution, Ltd., Seoul 07335 (KR)
(72) Inventor: OH, Young-Hoo, Daejeon 34122 (KR); KIM, Seung-Hyun, Daejeon 34122 (KR); OK, Seung-Min, Daejeon 34122 (KR); JO, Sang-Hyun, Daejeon 34122 (KR); CHO, Young-Bum, Daejeon 34122 (KR); HONG, Sung-Goen, Daejeon 34122 (KR)
(74) Representative: Plasseraud IP
(86) International application number: PCT/KR2022/020051
(87) International publication number: WO 2023/128389

(56) References cited:
- EP-A1- 3 352 292
- KR-A- 20120 018 719
- KR-A- 20130 062 056
- KR-A- 20150 074 384
- KR-A- 20180 004 992
- KR-A- 20210 029 130
- KR-B1- 102 263 291

## Description

### TECHNICAL FIELD

The present disclosure relates to a battery module, a battery pack including the battery module, and an energy storage system and a vehicle including the battery pack.

The present application claims priority to Korean Patent Application No. 10-2021-0189011 filed on December 27, 2021 in the Republic of Korea.

### BACKGROUND ART

Secondary batteries have high applicability according to product groups and electrical characteristics such as high energy density, and thus, are commonly applied not only to mobile devices but also to electric vehicles (EVs) or hybrid vehicles (HEVs) driven by electric power sources. Because secondary batteries may radically reduce the use of fossil fuel and do not generate any by-products that come with energy consumption, the secondary batteries are gaining attention as a new alternative energy source for improving eco-friendliness and energy efficiency.

Types of secondary batteries that are currently widely used include lithium-ion batteries, lithium polymer batteries, nickel cadmium batteries, nickel hydride batteries, and nickel zinc batteries. An operating voltage of a unit secondary battery cell, that is, a unit battery cell, ranges from about 2.5 V to about 4.5 V. Accordingly, when a higher output voltage is required, a battery pack may be configured by connecting a plurality of battery cells in series. Also, a battery pack may be configured by connecting a plurality of battery cells in parallel according to charge/discharge capacity required for the battery pack. Accordingly, the number of battery cells included in a battery pack may be set in various ways according to a required output voltage and/or charge/discharge capacity.

Meanwhile, when a battery pack is configured by connecting a plurality of battery cells in series/parallel, in general, a battery module including at least one battery cell is first configured, and other components are added using the at least one battery module to configure a battery pack or a battery rack.

A conventional battery module generally includes a plurality of battery cells stacked with each other and a module housing accommodating the plurality of battery cells. In the case of such a conventional battery module, when overheating occurs in a specific battery cell among the plurality of battery cells due to an abnormal situation, the heat generated in the overheated battery cell is transferred to adjacent battery cells as it is to generate thermal runaway, resulting in greater risks such as explosion of the battery module.

Therefore, it is required to find a way to provide a battery module capable of preventing thermal runaway when an abnormal situation occurs in a battery cell, a battery pack including the battery module, and an energy storage system and a vehicle including the battery pack.

Document EP 3 352 292 A1 discusses cartridges used to accommodate or stack a plurality of secondary batteries when configuring a battery module by including the secondary batteries. Document KR 2015 0074384 A1 discusses a secondary battery module in which a plurality of battery cells are stacked and spaced apart.

### DISCLOSURE

### Technical Problem

The present disclosure is designed to solve the problems of the related art, and therefore the present disclosure is directed to providing a battery module capable of preventing thermal runaway when an abnormal situation occurs in a battery cell, a battery pack including the battery module, and an energy storage system and a vehicle including the battery pack.

### Technical Solution

In the present disclosure, there is provided a battery module as described in claim 1.

Also, preferably, the cooling channel may be provided in plurality, and the plurality of cooling channels may be provided on upper and lower sides of the plurality of battery cells.

Also, preferably, the at least one cooling fin unit may be disposed in contact with the cooling channels provided on the upper and lower sides of the plurality of battery cells.

Also, preferably, the cooling fin unit may be provided in plurality, and the plurality of cooling fin units may be disposed between the plurality of battery cells.

Also, preferably, the at least one cooling fin unit may communicate with the plurality of cooling channels.

Also, preferably, the at least one cooling fin unit may include a fin channel connected to the plurality of cooling channels and into which the coolant flows.

Also, preferably, the at least one support rib may include a channel support extending from an end of the at least one cooling fin unit and supporting the at least one cooling channel; and a cell support extending from the channel support and supporting the plurality of battery cells.

Also, preferably, the cell support may be bent at a predetermined angle from the channel support.

Also, preferably, the at least one support rib may be integrally formed with the at least one cooling fin unit.

Also, preferably, the support rib may be provided in plurality, and the plurality of support ribs may be disposed to face each other on at least one end of the cooling fin unit.

In addition, the present disclosure provides a battery pack, comprising: at least one battery module according to the above embodiments; and a pack case accommodating the at least one battery module.

In addition, the present disclosure provides an energy storage system, comprising at least one battery pack according to the above embodiment.

In addition, the present disclosure provides a vehicle, comprising at least one battery pack according to the above embodiment.

### Advantageous Effects

According to various embodiments as described above, there may be provided a battery module capable of preventing thermal runaway when an abnormal situation occurs in a battery cell, a battery pack including the battery module, and an energy storage system and a vehicle including the battery pack.

### DESCRIPTION OF DRAWINGS

The accompanying drawings illustrate a preferred embodiment of the present disclosure and together with the foregoing disclosure, serve to provide further understanding of the technical features of the present disclosure, and thus, the present disclosure is not construed as being limited to the drawing.
FIG. 1 is a diagram for explaining a battery module according to an embodiment of the present disclosure.
FIG. 2 is a diagram for explaining a main part of the battery module of FIG. 1.
FIG. 3 is a diagram for explaining a cooling fin unit of the battery module of FIG. 2.
FIG. 4 is a cross-sectional view of a main part of the cooling fin unit of FIG. 3.
FIG. 5 is a diagram for explaining a cooling mechanism of the battery module of FIG. 1.
FIG. 6 is a diagram for explaining a thermal runaway prevention mechanism when an abnormal situation occurs in the battery module of FIG. 1.
FIG. 7 is a diagram for explaining a battery pack according to an embodiment of the present disclosure.

### BEST MODE

The present disclosure will now be described more fully with reference to the accompanying drawings, in which exemplary embodiments of the present disclosure are shown. These embodiments are provided so that the present disclosure will be thorough and complete, and will fully convey the concept of the present disclosure to one of ordinary skill in the art, and the present disclosure may be embodied in many different forms and should not be construed as being limited to the embodiments set forth herein. In addition, in order to help the understanding of the present disclosure, the accompanying drawings are not drawn to scale, but dimensions of some components may be exaggerated.

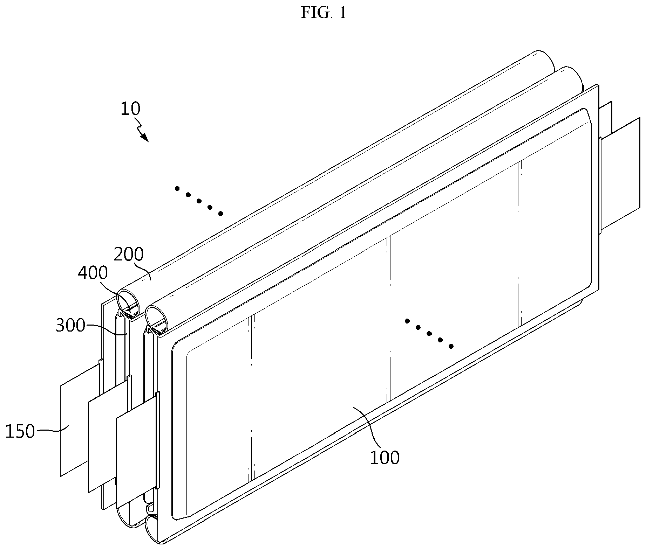

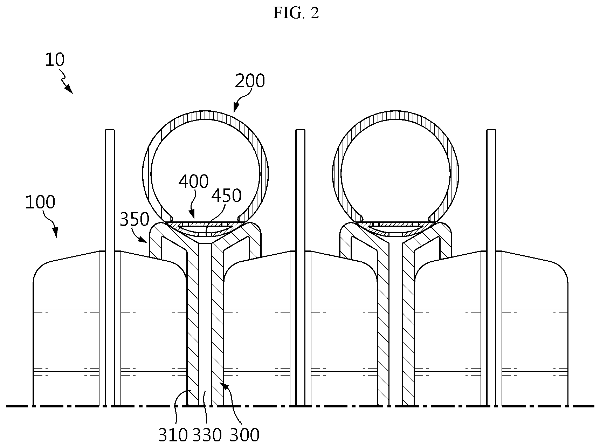

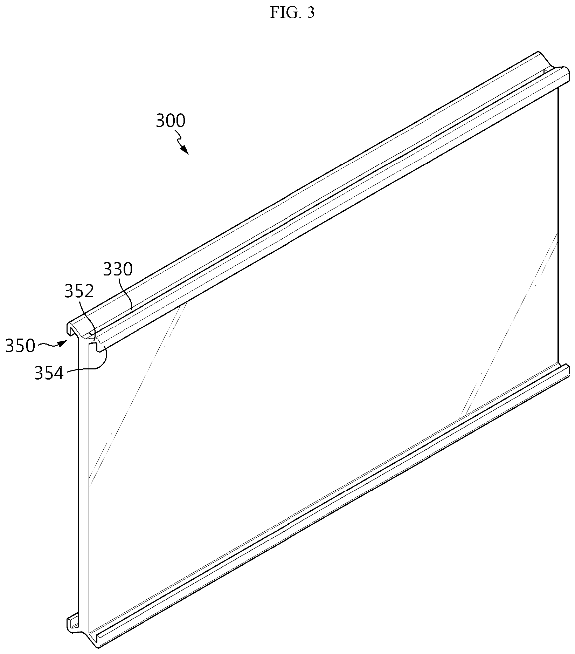

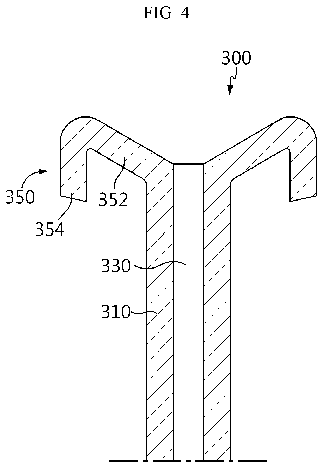

FIG. 1 is a diagram for explaining a battery module according to an embodiment of the present disclosure, FIG. 2 is a diagram for explaining a main part of the battery module of FIG. 1, FIG. 3 is a diagram for explaining a cooling fin unit of the battery module of FIG. 2, and FIG. 4 is a cross-sectional view of a main part of the cooling fin unit of FIG. 3.

Referring to FIGS. 1 to 4, a battery module 10 includes a plurality of battery cells 100, a cooling channel 200, and at least one cooling fin unit 300.

The plurality of battery cells 100 are secondary batteries, and may be provided as a pouch-type secondary battery, a prismatic secondary battery, or a cylindrical secondary battery. Hereinafter, in the present embodiment, the plurality of battery cells 100 will be described as being provided as a pouch-type secondary battery.

The plurality of battery cells 100 may each include a battery case accommodating the electrode assembly and an electrode lead 150 protruding out of the battery case and connected to the electrode assembly.

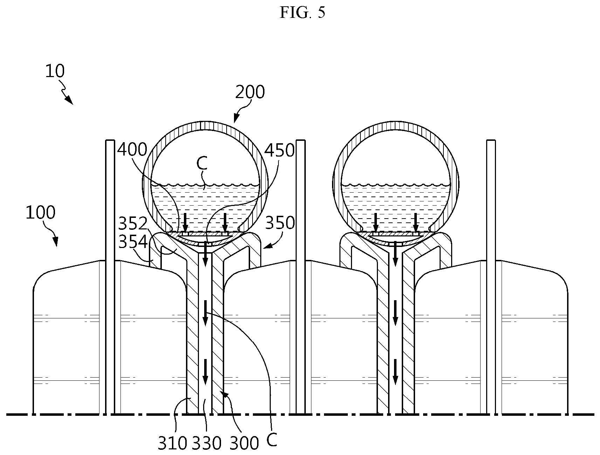

The cooling channel 200 may be provided on at least one of upper and lower sides of the plurality of battery cells 100. A coolant (C, see FIG. 5) for cooling the plurality of battery cells 100 may flow through the cooling channel 200.

The cooling channel 200 may be provided in plurality. The plurality of cooling channels 200 may be provided on both upper and lower sides of the plurality of battery cells 100.

The at least one cooling fin unit 300 is disposed in contact with the at least one cooling channel 200. Specifically, the at least one cooling fin unit 300 may be disposed in contact with the cooling channels 200 provided on the upper and lower sides of the plurality of battery cells 100. In addition, the at least one cooling fin unit 300 may communicate with the plurality of cooling channels 200.

The at least one cooling fin unit 300 may be provided in plurality. The plurality of cooling fin units 300 may be disposed between the plurality of battery cells 100.

Hereinafter, the plurality of cooling fin units 300 will be described in more detail.

The plurality of cooling fin units 300 may include a fin body 310, and include a fin channel 330,
and a support rib 350, respectively.

The fin body 310 is disposed between the plurality of battery cells 100 and may be disposed long along the vertical direction of the plurality of battery cells 100. The fin body 310 may be made of a metal material having high thermal conductivity.

The fin channel 330 is provided inside the fin body 310 and may be formed long along the longitudinal direction of the fin body 310. The fin channel 330 communicates with the plurality of cooling channels 200. Accordingly, the coolant may flow into the fin channel 330. Cooling efficiency of the plurality of battery cells 100 may be further improved as the coolant flows in through the fin channel 330.

The support rib 350 extends from an end of the at least one cooling fin unit 300, specifically, an end of the fin body 310, supports the at least one cooling channel and may support at least one battery cell 100 among the plurality of battery cells 100.

The support rib 350 may be provided and mounted as a separate member in the at least one cooling fin unit 300 or may be a component integrally formed with the at least one cooling fin unit 300. Hereinafter, in this embodiment, the support rib 350 is limitedly described as having a configuration integrally formed with the at least one cooling fin unit 300. Specifically, the support rib 350 may be integrally formed with the fin body 310 of the at least one cooling fin unit 300.

The support rib 350 may be provided in plurality.

The plurality of support ribs 350 may be disposed to face each other at one end of the cooling fin unit 300. Specifically, the plurality of support ribs 350 may be disposed to face each other on at least one end of the cooling fin unit 300, more specifically, at least one of the upper and lower ends of the fin body 310.

The plurality of support ribs 350 may include a channel support 352 and a cell support 354.

The channel support 352 extends from an end of the at least one cooling fin unit 300, specifically, an end of the fin body 310, more specifically, an upper end of the fin body 310, and may support the at least one cooling channel 200.

The channel support 352 extends from an end of the at least one cooling fin unit 300, specifically, an upper end of the fin body 310, and may support the at least one cooling channel 200.

The cell support 354 extends from the channel support 352 and may support the plurality of battery cells 100. The cell support 354 may be bent at a predetermined angle from the channel support 352. Specifically, the cell support 354 may be bent at a predetermined angle in a direction from the channel support 352 toward the battery cell 100.

The battery module 10 includes a channel connection portion 400.

The channel connection portion 400 is connected to the cooling channel 200 between the cooling channel 200 and the cooling fin unit 300. The channel connection portion 400 is configured to be at least partially melted or separated from the cooling channel 200 or deviated from the cooling channel 200 according to an external shock or temperature rise in an abnormal situation.

At least one or a plurality of connection holes 450 capable of supplying the coolant into the fin channel 330 of the cooling fin unit 300 is provided in the channel connection portion 400. Hereinafter, in this embodiment, the connection hole 450 will be described as being provided in plurality.

Hereinafter, a cooling mechanism of the battery module 10 according to an embodiment of the present disclosure will be described in more detail.

FIG. 5 is a diagram for explaining a cooling mechanism of the battery module of FIG. 1.

Referring to FIG. 5, the cooling channel 200 may cool the battery cells 100 by circulating the coolant C for cooling the battery cells 100. Here, the coolant C of the cooling channel 200 may flow into the fin channel 330 of the cooling fin unit 300 through the connection hole 450 of the channel connection portion 400. As such, as the coolant C flows in the cooling fin unit 300, the cooling efficiency of the battery cells 100 may be further improved.

In addition, in this embodiment, the cooling channel 200 through which the coolant C flows may be supported more stably through the support rib 350 of the cooling fin unit 300.

Hereinafter, a thermal runaway prevention mechanism of the battery module 10 according to an embodiment of the present disclosure will be described in more detail.

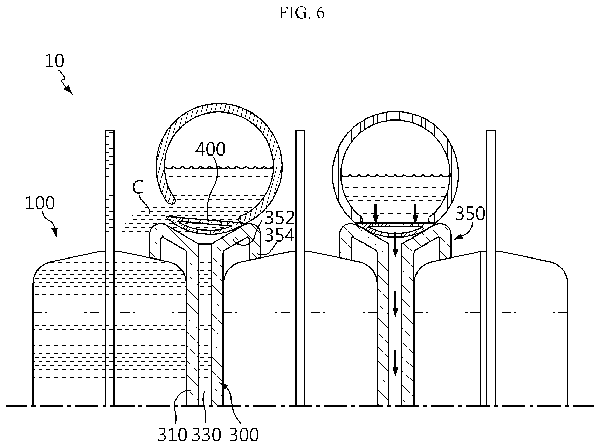

FIG. 6 is a diagram for explaining a thermal runaway prevention mechanism when an abnormal situation occurs in the battery module of FIG. 1.

Referring to FIG. 6, in at least one of the battery cells 100 of the battery module 10, a dangerous situation that may lead to a fire or the like may occur due to overheating caused by an abnormal situation.

When overheating occurs in the battery cell 100, the temperature of the battery cell 100 rises and the battery cell 100 may expand. Due to an external shock or temperature rise in such an abnormal situation, the channel connection portion 400 is configured to be at least partially melted or separated from the cooling channel 200 or deviated from the cooling channel 200.

Accordingly, the cooling channel 200 is opened so that the coolant C escapes out of the cooling channel 200 and functions as a fire extinguishing agent for suppressing the thermal runaway or fire of the battery cell 100 in which the abnormal situation occurs.

Meanwhile, the support rib 350 of the cooling fin unit 300 supports the battery cells 100 when the channel connection portion 400 and the cooling channel 200 are displaced or deformed, and thus may maintain the arrangement of the battery cells 100 as much as possible.

If the support form of the battery cells 100 collapses when the channel connection portion 400 and the cooling channel 200 are deviated or deformed, the structure of the entire battery module 10 may collapse, which may make the thermal runaway or the risk situation more dangerous. In this embodiment, since the battery cells 100 may be supported through the support rib 350 even in such an abnormal situation, the risk of structural collapse of the entire battery module 10 may be significantly prevented.

In addition, the support rib 350 may also act as a barrier between adjacent battery cells 100 by itself, which may effectively prevent flames or sparks, which may be caused in the battery cell 100 where an abnormal situation occurs, from being propagated toward adjacent battery cells 100.

As such, in the event of an abnormal situation, the battery module 10 according to this embodiment may significantly lower the risk, which may lead to thermal runaway of the entire battery module 10, through the cooling channel 200, the cooling fin unit 300 and the channel connection portion 400.

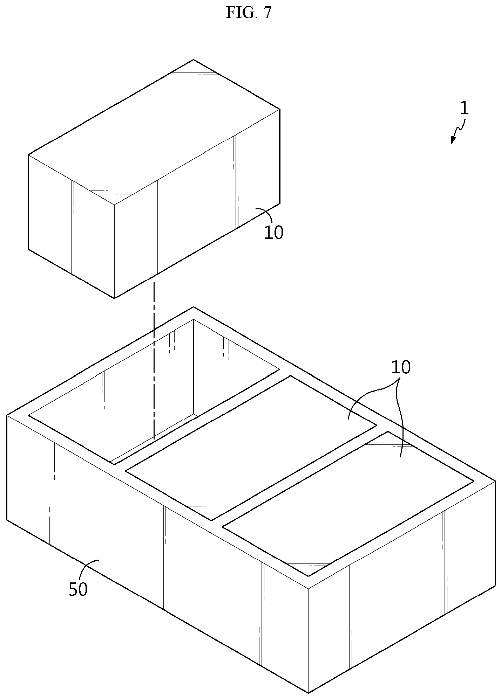

FIG. 7 is a diagram for explaining a battery pack according to an embodiment of the present disclosure.

Referring to FIG. 7, a battery pack 1 may include at least one or a plurality of battery modules 10 of the previous embodiment and a pack case 50 for accommodating the at least one or plurality of battery modules 10.

At least one or more battery packs 1 may be provided as an energy source of an energy storage system or a vehicle. In addition, it is also possible that the battery pack 1 is provided in other devices, instruments, and facilities using a secondary battery, in addition to the energy storage system or the vehicle.

As such, devices, the instruments and equipment including the battery pack 1 such as an energy storage system or a vehicle including the battery pack 1 according to the present embodiment may implement devices, instruments, facilities, or the like such as an energy storage system or a vehicle having all the advantages by the battery module 10 described above.

According to various embodiments as described above, there may be provided a battery module 10 capable of preventing thermal runaway when an abnormal situation occurs in a battery cell 100, a battery pack 1 including the battery module 10, and an energy storage system and a vehicle including the battery pack 1.

While the preferred embodiments of the present disclosure have been shown and described, the present disclosure is not limited to the specific embodiments described above, various modifications may be made within the scope of the claims by one of ordinary skill in the art to which the present disclosure pertains.

## Claims

1. A battery module (10), comprising:
a plurality of battery cells (100);
at least one cooling channel (200) provided on at least one side of the plurality of battery cells (100) and through which a coolant (C) for cooling the plurality of battery cells (100) may flow;
at least one cooling fin unit (300) disposed in contact with the at least one cooling channel (200) and having at least one support rib (350) for supporting the at least one cooling channel (200), and through which the coolant (C) may flow; and
a channel connection portion (400) connected to the cooling channel (200) between the cooling channel (200) and the cooling fin unit (300), wherein at least one connection hole (450) is provided in the channel connection portion (400) for supplying the coolant (C) into a cooling fin channel (330) of the cooling fin unit (300), wherein the channel connection portion (400) is configured to be at least partially melted, separated from the cooling channel (200) or deviated from the cooling channel (200) according to an external shock or temperature rise such that the coolant (C) escapes out of the cooling channel (200) and functions as a fire extinguishing agent for suppressing the thermal runaway or fire of the battery cells (100) in which the abnormal situation occurs.

2. The battery module (10) according to claim 1, wherein the cooling channel (200) is provided in plurality, and
wherein the plurality of cooling channels (200) are provided on upper and lower sides of the plurality of battery cells (100).

3. The battery module (10) according to claim 2, wherein the at least one cooling fin unit (300) is disposed in contact with the cooling channels (200) provided on the upper and lower sides of the plurality of battery cells (100).

4. The battery module (10) according to claim 3, wherein the cooling fin unit (300) is provided in plurality, and
wherein the plurality of cooling fin units (300) are disposed between the plurality of battery cells (100).

5. The battery module (10) according to claim 3, wherein the at least one cooling fin unit (300) communicates with the plurality of cooling channels (200).

6. The battery module (10) according to claim 5, wherein the at least one cooling fin unit (300) includes the fin channel (330) connected to the plurality of cooling channels (200) and into which the coolant (C) flows.

7. The battery module (10) according to claim 1, wherein the at least one support rib (350) includes:
a channel support (352) extending from an end of the at least one cooling fin unit (300) and supporting the at least one cooling channel (200); and
a cell support (354) extending from the channel support (352) and supporting the plurality of battery cells (100).

8. The battery module (10) according to claim 7, wherein the cell support (354) is bent at a predetermined angle from the channel support (352).

9. The battery module (10) according to claim 1, wherein the at least one support rib (350) is integrally formed with the at least one cooling fin unit (300).

10. The battery module (10) according to claim 1, wherein the support rib (350) is provided in plurality, and
wherein the plurality of support ribs (350) are disposed to face each other on at least one end of the cooling fin unit (300).

11. A battery pack (1), comprising:
at least one battery module (10) according to claim 1; and
a pack case (50) accommodating the at least one battery module (1).

12. An energy storage system, comprising at least one battery pack (1) according to claim 11.

13. A vehicle, comprising at least one battery pack (1) according to claim 11.

## Patentansprüche

1. Batteriemodul (10), umfassend:
eine Mehrzahl von Batteriezellen (100);
wenigstens einen Kühlkanal (200), welcher an wenigstens einer Seite der Mehrzahl von Batteriezellen (100) bereitgestellt ist und durch welchen ein Kühlmittel (C) zum Kühlen der Mehrzahl von Batteriezellen (100) strömen kann;
wenigstens eine Kühllamelleneinheit (300), welche in Kontakt mit dem wenigstens einen Kühlkanal (200) angeordnet ist und welche wenigstens eine Stützrippe (350) zum Stützen des wenigstens einen Kühlkanals (200) aufweist, und durch welche das Kühlmittel (C) strömen kann; und
einen Kanalverbindungsabschnitt (400), welcher zwischen dem Kühlkanal (200) und der Kühllamelleneinheit (300) mit dem Kühlkanal (200) verbunden ist, wobei wenigstens ein Verbindungsloch (450) zum Zuführen des Kühlmittels (C) in einen Kühllamellenkanal (330) der Kühllamelleneinheit (300) in dem Kanalverbindungsabschnitt (400) bereitgestellt ist, wobei der Kanalverbindungsabschnitt (400) dazu eingerichtet ist, nach einem externen Schock oder Temperaturanstieg wenigstens teilweise geschmolzen zu sein, von dem Kühlkanal (200) getrennt zu sein oder von dem Kühlkanal (200) abzuweichen, so dass das Kühlmittel (C) aus dem Kühlkanal (200) entweicht und als Feuerlöschmittel zum Unterdrücken des thermischen Durchgehens oder eines Feuers der Batteriezellen (100) fungiert, in welchen die abnormale Situation auftritt.

2. Batteriemodul (10) nach Anspruch 1, wobei der Kühlkanal (200) in Mehrzahl bereitgestellt ist, und
wobei die Mehrzahl von Kühlkanälen (200) an oberen und unteren Seiten der Mehrzahl von Batteriezellen (100) bereitgestellt ist.

3. Batteriemodul (10) nach Anspruch 2, wobei die wenigstens eine Kühllamelleneinheit (300) in Kontakt mit den Kühlkanälen (200) angeordnet ist, welche an den oberen und unteren Seiten der Mehrzahl von Batteriezellen (100) bereitgestellt sind.

4. Batteriemodul (10) nach Anspruch 3, wobei die Kühllamelleneinheit (300) in Mehrzahl bereitgestellt ist, und
wobei die Mehrzahl von Kühllamelleneinheiten (300) zwischen der Mehrzahl von Batteriezellen (100) angeordnet ist.

5. Batteriemodul (10) nach Anspruch 3, wobei die wenigstens eine Kühllamelleneinheit (300) mit der Mehrzahl von Kühlkanälen (200) kommuniziert.

6. Batteriemodul (10) nach Anspruch 5, wobei die wenigstens eine Kühllamelleneinheit (300) den Lamellenkanal (330) umfasst, welcher mit der Mehrzahl von Kühlkanälen (200) verbunden ist und in welchen das Kühlmittel (C) strömt.

7. Batteriemodul (10) nach Anspruch 1, wobei die wenigstens eine Stützrippe (350) umfasst:
eine Kanalstütze (352), welche sich von einem Ende der wenigstens einen Kühllamelleneinheit (300) erstreckt und welche den wenigstens einen Kühlkanal (200) stützt; und
eine Zellenstütze (354), welche sich von der Kanalstütze (352) erstreckt und welche die Mehrzahl von Batteriezellen (100) stützt.

8. Batteriemodul (10) nach Anspruch 7, wobei die Zellenstütze (354) von der Kanalstütze (352) um einen vorbestimmten Winkel gebogen ist.

9. Batteriemodul (10) nach Anspruch 1, wobei die wenigstens eine Stützrippe (350) mit der wenigstens einen Kühllamelleneinheit (300) integral gebildet ist.

10. Batteriemodul (10) nach Anspruch 1, wobei die Stützrippe (350) in Mehrzahl bereitgestellt ist, und
wobei die Mehrzahl von Stützrippen (350) dazu angeordnet ist, einander an wenigstens einem Ende der Kühllamelleneinheit (300) zugewandt zu sein.

11. Batteriepack (1), umfassend:
wenigstens ein Batteriemodul (10) nach Anspruch 1; und
ein Packgehäuse (50), welches das wenigstens eine Batteriemodul (1) aufnimmt.

12. Energiespeichersystem, umfassend wenigstens einen Batteriepack (1) nach Anspruch 11.

13. Fahrzeug, umfassend wenigstens einen Batteriepack (1) nach Anspruch 11.

## Revendications

1. Module de batterie (10), comprenant :
une pluralité d'éléments de batterie (100) ;
au moins un canal de refroidissement (200) prévu sur au moins un côté de la pluralité d'éléments de batterie (100) et à travers lequel peut s'écouler un liquide de refroidissement (C) pour refroidir la pluralité d'éléments de batterie (100) ;
au moins une unité d'ailette de refroidissement (300) disposée en contact avec l'au moins un canal de refroidissement (200) et présentant au moins une nervure de support (350) pour supporter l'au moins un canal de refroidissement (200), et à travers laquelle le liquide de refroidissement (C) peut s'écouler ; et
une partie de raccordement de canal (400) raccordée au canal de refroidissement (200) entre le canal de refroidissement (200) et l'unité d'ailette de refroidissement (300), dans lequel au moins un trou de raccordement (450) est prévu dans la partie de raccordement de canal (400) pour fournir le liquide de refroidissement (C) dans un canal d'ailette de refroidissement (330) de l'unité d'ailette de refroidissement (300), dans lequel la partie de raccordement de canal (400) est configurée pour être au moins partiellement fondue, séparée du canal de refroidissement (200) ou déviée du canal de refroidissement (200) selon un choc externe ou une augmentation de température de sorte que le liquide de refroidissement (C) s'échappe du canal de refroidissement (200) et fonctionne comme un agent d'extinction d'incendie pour supprimer l'emballement thermique ou l'incendie des éléments de batterie (100) dans lesquels la situation anormale se produit.

2. Module de batterie (10) selon la revendication 1, dans lequel le canal de refroidissement (200) est fourni en une pluralité, et
dans lequel la pluralité de canaux de refroidissement (200) sont prévus sur des côtés supérieur et inférieur de la pluralité d'éléments de batterie (100).

3. Module de batterie (10) selon la revendication 2, dans lequel l'au moins une unité d'ailette de refroidissement (300) est disposée en contact avec les canaux de refroidissement (200) prévus sur les côtés supérieur et inférieur de la pluralité d'éléments de batterie (100).

4. Module de batterie (10) selon la revendication 3, dans lequel l'unité d'ailette de refroidissement (300) est fournie en une pluralité, et
dans lequel la pluralité d'unités d'ailettes de refroidissement (300) sont disposées entre la pluralité d'éléments de batterie (100).

5. Module de batterie (10) selon la revendication 3, dans lequel l'au moins une unité d'ailette de refroidissement (300) communique avec la pluralité de canaux de refroidissement (200).

6. Module de batterie (10) selon la revendication 5, dans lequel l'au moins une unité d'ailette de refroidissement (300) comporte le canal d'ailette (330) raccordé à la pluralité de canaux de refroidissement (200) et dans lequel le liquide de refroidissement (C) s'écoule.

7. Module de batterie (10) selon la revendication 1, dans lequel l'au moins une nervure de support (350) comporte :
un support de canal (352) s'étendant à partir d'une extrémité de l'au moins une unité d'ailette de refroidissement (300) et supportant l'au moins un canal de refroidissement (200) ; et
un support d'élément (354) s'étendant à partir du support de canal (352) et supportant la pluralité d'éléments de batterie (100).

8. Module de batterie (10) selon la revendication 7, dans lequel le support d'élément (354) est courbé à un angle prédéterminé par rapport au support de canal (352).

9. Module de batterie (10) selon la revendication 1, dans lequel l'au moins une nervure de support (350) est formée d'un seul tenant avec l'au moins une unité d'ailette de refroidissement (300).

10. Module de batterie (10) selon la revendication 1, dans lequel la nervure de support (350) est fournie en une pluralité, et
dans lequel la pluralité de nervures de support (350) sont disposées de manière à se faire face sur au moins une extrémité de l'unité d'ailette de refroidissement (300).

11. Bloc-batterie (1), comprenant :
au moins un module de batterie (10) selon la revendication 1 ; et
un boîtier de bloc (50) logeant l'au moins un module de batterie (1).

12. Système de stockage d'énergie, comprenant au moins un bloc-batterie (1) selon la revendication 11.

13. Véhicule, comprenant au moins un bloc-batterie (1) selon la revendication 11.
